# EUROPEAN PATENT SPECIFICATION

(11) **EP 3 134 336 B1**
(45) Date of publication and mention of the grant of the patent: **28.07.2021**
(21) Application number: 15736656.8
(22) Date of filing: 22.04.2015
(51) Int. Cl.: B65D 85/804, B65D 65/46, C08K 3/26, C08L 67/04, C08K 7/28, C08L 67/02, C08K 3/013

(54) **BIODEGRADABLE AND COMPOSTABLE CAPSULE**
BIOLOGISCH ABBAUBARE UND KOMPOSTIERBARE KAPSEL
CAPSULE BIODÉGRADABLE ET COMPOSTABLE

(30) Priority: 24.04.2014 IT TO20140343
(43) Date of publication of application: 01.03.2017
(73) Proprietor: Fi-plast S.r.l., 21050 Gorla Maggiore (VA) (IT)
(72) Inventor: MARIANI, Gianluigi, 21050 Gorla Maggiore (VA) (IT); DI FIORE, Carmine, 21050 Gorla Maggiore (VA) (IT)
(74) Representative: Garavelli, Paolo
(86) International application number: PCT/IT2015/000111
(87) International publication number: WO 2015/162632

(56) References cited:
- WO-A1-2005/063881
- WO-A1-2012/077066
- US-A1- 2005 203 208
- US-A1- 2012 097 602
- US-A1- 2013 045 308

## Description

The present invention relates to a biodegradable and compostable capsule, to be used in automatic apparatuses for producing coffee or, more in general, hot and/or cold beverages, wherein the closing membrane is made of a film composed of a compound comprising a thermoplastic polymer or a mixture of thermoplastic polymers, completely biodegradable and compostable, containing a percentage from 15% to 90% of a "particular filler" dispersed in the polymeric matrix.

A biodegradable and compostable polymer, according to UNI EN 13432 Standard or the like, is a polymer which is essentially biodegradable or which can be assimilated by naturally occurring micro-organisms (algae, bacteria,...) and which does not release any obnoxious substance for the environment. More exactly, a biodegradable polymer is a material "capable of being subjected to decomposition in carbon dioxide, methane, water, inorganic compounds and biomasses. Compostability is the biodegradability of the material obtained putting it in contact with suitable micro-organisms capable to perform the degrading process). Therefore, it is a material with low environmental impact.

A filler is an organic or inorganic material, which is added to a polymer for conferring it particular physical and/or chemical features. Also the filler is a material with low environmental impact.

Some thermoplastic polymers, provided with particular properties such as low or very low gas permeability and practically null release of substances, are used, mainly as film, also in combination with aluminium films, for packaging foodstuff. This has allows packaging food in a controlled atmosphere with the strong advantage of allowing foods to remain "fresh" for rather long times and with an extremely low bacterial charge, allowing us to be fed with healthier food.

The use of automatic packaging plants and the relatively low cost of packaging materials, has brought about the diffusion of single-dose packages, with a consequent relevant growth of the number of packages to be disposed of after use.

An example of this trend are coffee capsules. From more than ten years, the consumption of coffee is more and more increasing, both at home and outside (offices, business places, ...) prepared with the so-called capsules: cartridges ready to be inserted in a coffee machine, which are practical and quick. But "portioned" coffee, so much appreciated by consumers, has a high environmental cost, since every single cup implies the use of a package, made of plastic only, metal only or a combination of both, to be unavoidably disposed of in a landfill, also due to the difficulty of separating its components after its use, creating relevant environmental problems.

US-A1-2012/097602, WO-A1-2012/077066, US-A1-2013/045308, US-A1-2005/203208 and WO-A1-2005/063881 disclose prior art biodegradable and compostable capsules.

It must further be observed that these containers, after their use, contain a coffee residue (in turn containing water) which is a very good fertilizer.

The fact that materials used for packaging are biodegradable allows sending to composting plants the packages with food residues therein. In case of coffee capsules, wherein the foodstuff residue is very relevant in volume, with respect to the package the use of biodegradable and compostable polymers when packaging allows obtaining an end product which is useful for agriculture (the compost) which allows avoiding the use of chemical fertilizers, such as for example nitrates, which can cause, when incorrectly managed, pollution problems.

Object of the present invention is providing a completely biodegradable and compostable capsule, according to claim 1, to be used in automatic apparatuses for producing coffee or, more in general, hot and/or cold beverages.

In particular, the above compound is complying with the technical standard in the field of biodegradable materials, UNI EN 13432, and therefore can be disposed of in the "humid" fraction of wastes.

According to the invention, the polymer has a HDT (Heat Deflection Temperature) included between 70°C and 220°C measured at a pressure of 0.45 MPa at 120°C/hour according to ISO 75 technical standard. Preferably, the filler comprises particles whose squat and/or lamellar physical shape can be compared with a sphere, a cube, a parallelepiped, a flake, a fibre, etc. Since in any case these are particles with mutually different sizes, it is common practice to designate their sizes by referring to some conventions. For example, D50 = 1 micron states that 50% of the particles of a given sample pass through a sieve with 1-micron meshes for one micron. The particles of the present invention have a D50 included between 1 micron and 200 micron.

The material of the present invention is suitable to be used for producing capsules, or better for producing closing films for the capsules made of biodegradable material, as replacement of traditional non-biodegradable closing films (for example made of aluminium or like cellulose, which, though being biodegradable, is particularly delicate) for containing coffee and/or other infusion and/or dilution products, so that, after its use, said capsules, also being made of biodegradable and compostable material, can be disposed of together with their contents and inserted in a composting plant in which they can be transformed together with the rest of organic wastes into compost useful as fertilizer for agriculture.

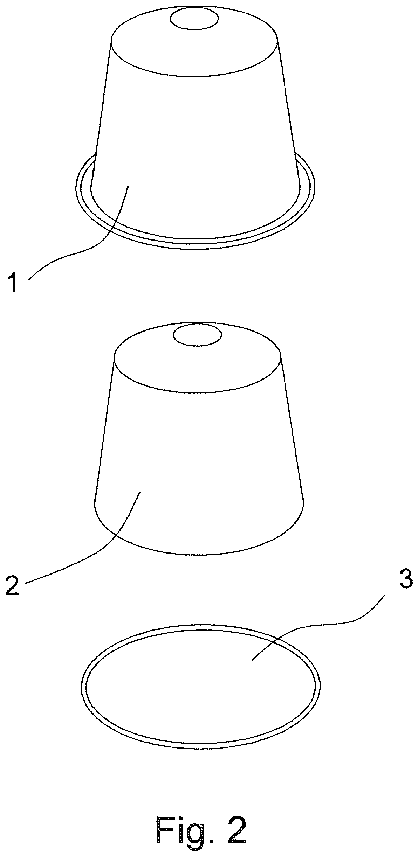

The solution of the present invention is highly cheaper and technologically simpler with respect to other closing systems (both metallic and biodegradable and compostable systems). In fact, as will be described below, in particular in fig. 2, the system of the invention requires two elements only, namely a lower number of elements with respect both to a capsule of the Nespresso type, and to the biodegradable capsule of the Ethical Coffee Company type.

The invention will now be described, as a nonlimiting example, according to a preferred embodiment thereof and with reference to the enclosed figures, in which:
- figure 1 shows a wide number of biodegradable polymers, classified according to their belonging,
- figure 2 shows a coffee capsule according to the invention;
- figures 3 (a, b, c) show some coffee capsules made of various materials.

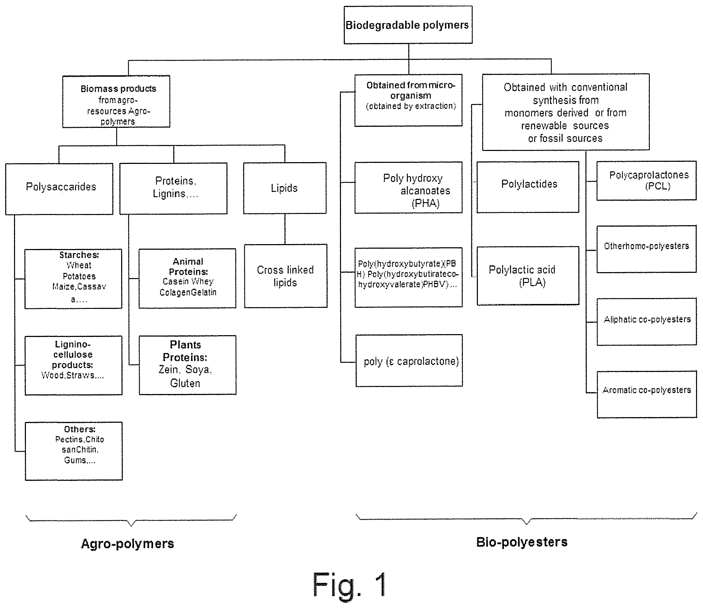

The table in figure 1 shows a wide number of biodegradable polymers, classified according to their synthesis process, for example:
1. polymers from biomass such as agro-polymers of agro-resources (for example, amide, cellulose, lipids, etc.);
2. polymers obtained from microbial production (for example fermenting), such as poly-hydroxy-alkanoates, whose generic formula is: 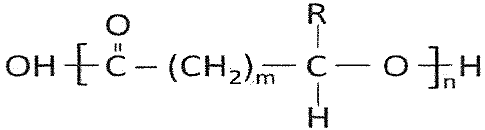
   if m=1 and R=H, there is PHA,
   if m=1 and R=CH₃, there is PHB,
   it must be noted that, if m=0 and R=H, there is polylactic acid (PLA);
3. polymers obtained with conventional synthesis processes either from monomers coming from agro-resources, for example, poly-lactic acid (PLA), or from monomers coming from fossil resources.

The materials can be obtained either from renewable resources or from fossil sources, but all final polymers are equally biodegradable and compostable according to UNI EN13432 technical standard. These biodegradable polymers can further be classified into two main categories:
1. agro-polymers;
2. biodegradable polyesters or bio-polyesters.

For producing the compound according to the invention, every biodegradable and compostable polymer known in practice and in literature can be employed, such as for example various biodegradable polyesters, in particular:
- polyesters obtained from poly-lactic (PLA) and products related thereto, such as copolymers and blends;
- various polyesters including aliphatic-aromatic co-polyesters, such as those modified with terephthalic acid (adipate terephthalate polybutylene PBAT, also known as ECOFLEX), including for example those obtained from other biodegradable aliphatic polyesters, such as poly-oxi-alkanoates, aliphatic polyesters based on succinic acid (PBS), based on adipic acide (PBA), mixtures or blends;
- polycaprolactones (PCL) or polymers derived therefrom;
- biodegradable polyester-amides or their copolymers;
- biodegradable cellulose esters or their derivatives, amid-based products and their mixtures.

Such materials are commercially available from several Companies, among which Basf, DuPont, Metabolix, Mitsubishi, Mitzui, Natureworks, Novamont.

For preparing the compound according to the invention, to said biodegradable and compostable polymers one or more fillers are added, namely a material suitable to modify the chemical and/or physical properties of basic polymers; it is organic.

Fillers are shaped as small particles with a granulometry D50 included between 1 micron and 200 micron. They can also have been subjected to a surface treatment process, namely the addition of particular substances (ex. stearin) on the surface, suitable to improve adhesion and/or dispersion towards the polymeric matrix. (For example, calcium carbonate can be found on the market with various stearin-based surface treatments, to improve its capability of being disperses and its compatibility towards the polymeric phase). Some inorganic fillers are, for example, talc, calcium carbonate, magnesium carbonate, mixed carbonates, silica, alumina, mica, kaolin, titanium dioxide, pumices, zeolites and similar products, for example glass microspheres, hollow or filled, ceramic microspheres, etc. Organic fillers are, for example, cellulosic, amid or wood particles and/or fibres.

The search performed for setting up the compositions has been performed by using both a twin-screw extruder Labtech LTE 26-40, and a single-screw extruder Labtech I 25-30/CV.

In the first case, the fillers have been directly inserted in the melted polymer, through two side chargers. In the second case, both polymers and filler have all been inserted as first supply, after a suitable pre-mixing.

In both cases, the results have been satisfactory, even if the use of a twin-screw extruder is preferable, due to the undoubted advantages in obtaining a better dispersion of the filler/s in the polymer or in the mixture of polymers.

The same results can be obtained, according to the prior art, by preparing firstly some concentrates composed of polymer + filler (the master batches) and afterward by diluting them when preparing the film.

In some cases, suitable compatible agents have been added to the various mixtures of polymers, as known in the *"blending"* field (namely the mixing of more polymers, even not compatible), to obtain polymeric matrixes better intermixed one with the others.

Suitable sliding and/or lubricating and/or antistatic additives, etc. have also thereby been added, as known in the filming field, such as sliding agents, ex amides (erucamide, oleamide, ...), stearates (calcium stearate, magnesium stearate,...), antistatic agents (GMS, polyethylene glycols, ...) etc.

With the obtained compounds, films have bene produced; the technologies for producing films are generally divided into two big families: "bubble films" and "cast films"; both techniques have to be deemed valid with a compound according to the invention. However, the "cast film" technology must be preferred, without this being deemed as exclusive, since with materials with high filler concentration the bubble technology is less performing.

It is also known that, when producing films, multilayered structures can be made, with various polymers, paper, membranes, etc. for improving the barrier values to oxygen, carbon dioxide, humidity, etc. This fact is extremely interesting industrially, since it allows making films with modified barrier, which allow prolonging the life of foodstuff protected thereby. In the case of a capsule, a better barrier protects the coffee quality more in the years. Therefore, such technique must be included within the variations of the present invention. Substances are also known, such as organic compounds, zeolites, silica, ... as they are, or suitably modified, which, embedded in the polymeric matrix or confined in a single film layer, can selectively react with oxygen or with carbon dioxide or with steam by entrapping and/or linking it to them (ex. the Amosorb products from Colormatrix, which operate as traps for oxygen, etc.) or more simply retarding the diffusion process through the film.

Such films have been successfully used for closing the capsules for coffee and other infusion products, by employing various known technologies, in particular welding.

In particular, such films have shown the capability of being homogeneously drilled under a water pressure, passing only the beverage and not possible residues, in the same way as current aluminum closures behave.

Figure 2 shows a coffee capsule according to the invention. Said capsule comprises a containing shell (1), in which coffee (2) is inserted, and which is closed by a membrane (3) made of a film of the described type. Both the containing shell (1), and the membrane (3) comply with UNI EN 13432 standard for which the capsule itself can be disposed of, together with coffee residues, in the "humid" fraction of the wastes, and be thereby sent to composting.

Experiments have shown that valid products are obtained by using, for the membrane (3), a biodegradable and compostable polymer, with a percentage of filler included between 15% and 90%. The best results are however obtained by using:
- a polymer and/or a mixture of biodegradable and compostable polymers, which does not release substances and having a HDT (Heat Deflection Temperature) measured at a pressure of 0.45 MPa at 120°C/hour according to ISO 75 technical standard included between 70°C and 220°C;
- a percentage of filler (and/or mixtures of various fillers) included between 15% and 90%, preferably between 15% and 60%, with particles with various structures and geometric shapes.

It is however necessary to observe that both polymers, and filler can be subjected to undesired effects with the packaged product.

As regards the filler, for example calcium carbonate, though being rather valid for this application, since it is easily available with high purity degrees at competitive prices, it tends to interact with acid substances and therefore, in case of coffee, to release substances towards the beverage.

As regards the polymers, those based on amid can be easily dissolved in water and migrate towards the beverages.

Therefore, it is advisable to choose those which, less than others, have, under the operating conditions of the capsule (hot water and pressure in case of coffee), the trend to migrate towards the specific beverage of interest.

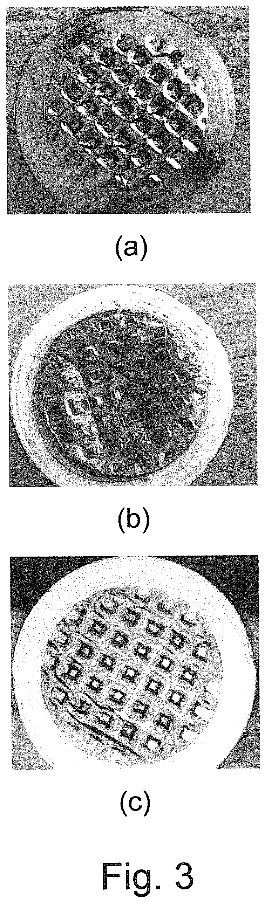

Figures 3 (a, b, c) show, as an example, the embodiments of capsules for coffee. In particular, Figure 3a shows a capsule in which the closing membrane is made of aluminum, according to the prior art, while Figures 3 (b, c) show capsules which are not part of the invention.

In Figure 3b, the membrane has a composition composed of 51% of PBAT and 49% of calcium carbonate. Though being absolutely suitable for making a film used for closing the capsule containing coffee, it has provided a negative result, since the obtained film is particularly elastic and, instead of being drilled under the pressure exerted by hot water, gets deformed, not allowing the passage of the beverage.

In Figure 3c, the membrane has a composition composed of 40% of PLA, 11% of PBAT and 49% of glass microspheres. In this case, the result has been positive, since the film has been drilled in the desired points, leaving the beverage pass without dragging therewith the solid residue (for example, coffee laying), exactly as occurs with aluminium (Figure 3a).

Drilling tests for capsules have been performed on various standard coffee machines.

As can be seen from the images, in the case shown in Figure 3c, the closure (40% of PLA, 11% of PBAT and 49% of glass microspheres), has had a behavior equivalent to that of industrially used aluminum (Figure 3a). In the case shown in Figure 3b, the closure (51% of PBAT and 49% of calcium carbonate) has had a bad behavior de to the lack of drilling of the closing film in the points where this is necessary due to the combined effect of water pressure and heat, which occurs when coffee is delivered.

With the second composition (40% of PLA, 11% of PBAT and 49% of glass microsphere) it is thereby possible to make a capsule whose closure, made of biodegradable and compostable material, has a behavior wholly equal to the currently used one.

As experiments have demonstrated, it is possible to replace aluminum or complex systems with many elements when closing the coffee capsules with a single film made of biodegradable and compostable material. It follows that used capsules, if also made of biodegradable and compostable material, can be disposed of together with humid domestic wastes without particular problems. This is a particularly important feature in case of uses of relevant amounts, such as communities, workplaces and restoration, where used capsules could be collected and treated in normal composting plants for producing fertilizers for agriculture, thereby avoiding to transfer big amounts of mixed material (plastics, metal, used coffee, water in landfills and/or waste burners.

Other relevant advantages, deriving from the use of the material according to the invention, consist in reducing the costs, due to the use of a plastic material which is surely cheaper than aluminum, and in reducing the total energy for producing the capsule, since necessary energy for obtaining the plastic film of the invention is two orders of magnitude lower than the one necessary for producing the corresponding amount of aluminum film.

## Claims

1. Biodegradable and compostable capsule, to be used in automatic apparatuses for producing coffee or, more in general, hot and/or cold beverages, said capsule being suitable to contain infusion products for producing beverages, wherein an infusion product (2) is contained in a containing shell (1) closed through a membrane (3),
said membrane (3) being a single layer and being made with a material comprising a biodegradable and compostable polymer, or a mixture of biodegradable and compostable polymers,
said biodegradable and compostable polymer or said mixture of biodegradable and compostable polymers having a polymeric matrix,
said biodegradable and compostable capsule being **characterized in that**:
one or more fillers is in said polymeric matrix, and
the material has the following composition:
from 10% to 85%, preferably from 40% to 85%, of one or a mixture of aliphatic or aliphatic-aromatic polyesters, such as PLA, PBAT, PBS or PBA, said one or a mixture of aliphatic or aliphatic-aromatic polyesters containing from 15% to 90% of one filler, wherein
said filler comprises small particles with a granulometry D50 included between 1 micron and 200 micron, which are designed not to interact with the beverage delivered through the capsule,
said biodegradable and compostable polymer, or mixture of biodegradable and compostable polymers, has a Heat Deflection Temperature, HDT, measured at a pressure of 0.45 MPa at 120°C/hour according to ISO 75 technical standard included between 70°C and 220°C; and
said filler is organic and is chosen among cellulosic, amid or wood fibres.

2. Biodegradable and compostable capsule according to claim 1, **characterized in that** said biodegradable and compostable polymer, or mixture of biodegradable and compostable polymers, is chosen between:
• agro-polymers from biomass coming from agro-resources;
• bio-polyester polymers.

3. Biodegradable and compostable capsule according to claim 2, **characterized in that** said bio-polyester polymers comprise:
• polyesters obtained from polylactic acid (PLA) and products related thereto, such as copolymers and blends;
• various polyesters including aliphatic-aromatic co-polyesters such as those modified with terepthtalic acid (PBAT), including for example those obtained from other biodegradable aliphatic polyesters such as polyoxialkanoates, aliphatic polyesters based on succinic acid (PBS), adipic acid (PBA) and their mixtures or blends;
• polycaprolactones (PCL) or polymers derived therefrom;
• biodegradable polyester amides or their copolymers;
• biodegradable cellulose esters or their derivatives, produced with amid base and their mixtures.

## Patentansprüche

1. Biologisch abbaubare und kompostierbare Kapsel zur Verwendung in automatischen Geräten zur Herstellung von Kaffee oder allgemeiner Heiß-und/oder Kaltgetränken, wobei die Kapsel geeignet ist, Aufgussprodukte zur Herstellung von Getränken aufzunehmen, in denen ein Aufgussprodukt product (2) in einem Behältermantel (1) enthalten ist, der durch eine Membran (3) verschlossen ist,
wobei die Membran (3) eine Monoschicht ist und aus einem Material hergestellt ist, das ein biologisch abbaubares und kompostierbares Polymer oder eine Mischung aus biologisch abbaubaren und kompostierbaren Polymeren umfasst,
das biologisch abbaubare und kompostierbare Polymer oder die Mischung aus biologisch abbaubaren und kompostierbaren Polymeren mit einer Polymermatrix,
wobei die biologisch abbaubare und kompostierbare Kapsel **dadurch gekennzeichnet ist, dass**:
in der Polymermatrix befinden sich ein oder mehrere Füllstoffe, und das Material hat die folgende Zusammensetzung: 10 bis 85 %, vorzugsweise 40 bis 85 % eines oder einer Mischung von aliphatischen oder aliphatisch-aromatischen Polyestern, wie PLA, PBAT, PBS, PBA, genannt ein oder eine Mischung von aliphatischen oder aliphatisch-aromatischen Polyestern, die 15 bis 90 % eines Füllstoffs enthalten,
wobei der Füllstoff kleine Partikel mit einer Partikelgröße D50 zwischen 1 Mikron und 200 Mikron umfasst, die dazu bestimmt sind, nicht mit dem durch die Kapsel ausgegebenen Getränk zu interagieren,
das biologisch abbaubare und kompostierbare Polymer oder die Mischung aus biologisch abbaubaren und kompostierbaren Polymeren eine Wärmeformbeständigkeitstemperatur, HDT, gemessen bei einem Druck von 0,45 MPa bei 120°C/Stunde gemäß dem technischen Standard ISO 75 zwischen 70°C und 220°C aufweist; und
der Füllstoff organisch ist und aus Zellulose, Stärke oder Holzfasern ausgewählt ist.

2. Biologisch abbaubare und kompostierbare Kapsel nach Anspruch 1, **dadurch gekennzeichnet, dass** das biologisch abbaubare und kompostierbare Polymer oder die Mischung aus biologisch abbaubaren und kompostierbaren Polymeren ausgewählt ist aus:
• Biomasse-Agropolymere aus Agrarressourcen;
• Bio-Polyester-Polymere.

3. Biologisch abbaubare und kompostierbare Kapsel nach Anspruch 2, **dadurch gekennzeichnet, dass** die Bio-Polyester-Polymere umfassen:
• Polyester aus Polymilchsäure (PLA) und verwandte Produkte, wie Copolymere und Blends;
• verschiedene Polyester einschließlich aliphatisch-aromatischer Copolyester, wie solche, die mit Terephthalsäure (PBAT) modifiziert sind, einschließlich beispielsweise solcher, die aus anderen biologisch abbaubaren aliphatischen Polyestern wie Polyoxyalkanoaten, aliphatischen Polyestern auf Basis von Bernsteinsäure (PBS), Adipinsäure (PBA) und ihren Mischungen oder Mischungen;
• Polycaprolactone (PCL) oder davon abgeleitete Polymere;
• biologisch abbaubare Polyesteramide oder deren Copolymere;
• biologisch abbaubare Celluloseester oder deren Derivate, Produkte auf Stärkebasis und deren Mischungen.

## Revendications

1. Capsule biodégradable et compostable, destinée à être utilisée dans des équipements automatiques pour la production de café ou, plus généralement, de boissons chaudes et/ou froides, ladite capsule étant adaptée pour contenir des produits d'infusion pour la production de boissons, dans laquelle un produit pour infusion (2) est contenu dans une enveloppe de récipient (1) fermée par une membrane (3),
ladite membrane (3) étant une monocouche et étant réalisée avec un matériau comprenant un polymère biodégradable et compostable, ou un mélange de polymères biodégradables et compostables,
ledit polymère biodégradable et compostable, ou ledit mélange de polymères biodégradables et compostables ayant une matrice polymère,
ladite capsule biodégradable et compostable étant **caractérisée par le fait que**:
une ou plusieurs charges se trouvent dans ladite matrice polymérique, et le matériau a la composition suivante: de 10 à 85 %, de préférence de 40 à 85 %, d'un ou d'un mélange de polyesters aliphatiques ou aliphatiques-aromatiques, tel que le PLA , PBAT, PBS, PBA, appelés un ou un mélange de polyesters aliphatiques ou aliphatiques-aromatiques contenant de 15 à 90 % d'une charge,
dans lequel ladite charge comprend de petites particules de granulométrie D50 comprise entre 1 micron et 200 microns, qui sont conçues pour ne pas interagir avec la boisson distribuée à travers la capsule,
ledit polymère biodégradable et compostable, ou mélange de polymères biodégradables et compostables a une Température de Déflexion à la Chaleur, HDT, mesurée à une pression de 0,45 MPa à 120°C/heure selon la norme technique ISO 75 comprise entre 70°C et 220°C ; et
ladite charge est organique et est choisie parmi la cellulose, l'amidon ou les fibres de bois.

2. Capsule biodégradable et compostable selon la revendication 1, **caractérisée en ce que** ledit polymère biodégradable et compostable, ou mélange de polymères biodégradables et compostables, est choisi parmi :
• les agro-polymères de biomasse issus d'agro-ressources ;
• polymères bio-polyester.

3. Capsule biodégradable et compostable selon la revendication 2, **caractérisée en ce que** lesdits polymères bio-polyester comprennent :
• les polyesters obtenus à partir d'acide polylactique (PLA) et de produits apparentés, tels que les copolymères et les mélanges ;
• divers polyesters dont les copolyesters aliphatiques-aromatiques tels que ceux modifiés par l'acide téréphtalique (PBAT), y compris par exemple ceux obtenus à partir d'autres polyesters aliphatiques biodégradables tels que les polyoxyalcanoates, les polyesters aliphatiques à base d'acide succinique (PBS), d'acide adipique (PBA) et leurs mélanges ou mélanges;
• les polycaprolactones (PCL) ou polymères dérivés de celles-ci ;
• les polyesteramides biodégradables ou leurs copolymères ;
• les esters de cellulose biodégradables ou leurs dérivés, les produits à base d'amidon et leurs mélanges.
